# FASCICULE DE BREVET EUROPEEN

(11) **EP 3 298 749 B1**
(45) Date de publication et mention de la délivrance du brevet: **13.07.2022**
(21) Numéro de dépôt: 16729021.2
(22) Date de dépôt: 12.05.2016
(51) Int. Cl.: H04L 65/1069, H04L 65/10, H04L 65/1063, H04L 65/1016

(54) **PROCÉDÉ DE CONTRÔLE D'UNE SESSION RELATIVE A UN SERVICE**
VERFAHREN ZUR ÜBERWACHUNG EINER AUF EINEN DIENST BEZOGENEN SITZUNG
METHOD FOR MONITORING A SESSION RELATED TO A SERVICE

(30) Priorité: 18.05.2015 FR 1554429
(43) Date de publication de la demande: 28.03.2018
(73) Titulaire: ORANGE, 92130 Issy-les-Moulineaux (FR)
(72) Inventeur: DOREE, José, 22300 Lannion (FR); LE ROUZIC, Jean-Claude, 22560 Trebeurden (FR)
(86) Numéro de dépôt international: PCT/FR2016/051126
(87) Numéro de publication internationale: WO 2016/185118

(56) Documents cités:
- US-A1- 2010 211 666

## Description

L'invention se situe dans le domaine de la gestion de flux médias lors d'une session de communication entre deux entités, et concerne plus particulièrement un procédé de contrôle d'une session de communication relative à un service.

Plusieurs méthodes de gestion de flux sont connues de l'état de la technique. Dans les réseaux de type IP (pour « Internet Protocol »), il est notamment connu de combiner le protocole SDP (pour « Session Description Protocol ») tel que défini dans le document RFC 4566 de l'IETF (pour « Internet Engineering Task Force »), avec le protocole SIP (pour « Session Initiation Protocol ») tel que décrit dans le document RFC 3261 également de l'IETF, afin d'établir, modifier ou encore terminer une session de communication multimédia entre deux entités. Le protocole SDP permet en particulier de décrire un ensemble de flux médias associés à une telle session de communication multimédia.

Le document RFC 3264 de l'IETF, intitulé « An Offer/Answer Model with the Session Description Protocol », décrit par ailleurs un mécanisme permettant à deux entités d'utiliser le protocole SDP afin de négocier des paramètres relatifs à des flux médias souhaités pour une session à établir ou à modifier. Selon ce modèle, une première entité soumet une offre, dite « offre SDP », sous la forme d'une description de session afin d'établir ou modifier une session, à une deuxième entité. Cette offre comprend une liste de descriptions de flux médias précisant notamment pour chaque flux un type de média (e.g. audio, vidéo, texte), un numéro de port de destination, un protocole de transport, ou encore des informations d'encodage. L'entité qui soumet l'offre peut ainsi indiquer à l'entité destinataire de l'offre, les différents médias et caractéristiques (e.g. type d'encodage, bande passante requise, direction du flux) associées qu'elle est en mesure de prendre en charge. L'entité destinataire de l'offre, en fonction par exemple des médias et encodages qu'elle-même prend en charge, accepte l'offre en émettant une réponse, dite « réponse SDP », indiquant à l'entité émettrice de l'offre les flux médias qu'elle est en mesure de traiter. L'entité destinataire de l'offre peut également émettre une nouvelle offre à destination de la première entité, comprenant par exemple d'autres médias qu'elle souhaite ajouter à la session. Les deux entités sont ainsi susceptibles de jouer indifféremment le rôle de l'émetteur d'une offre et celui du destinataire d'une offre. Ce mécanisme d'offre/réponse est en outre également applicable pour des sessions de communications impliquant plus de deux participants (e.g. visioconférence comprenant plus de deux participants).

Lors de la création de la session, certains flux sont susceptibles de ne pas être établis. De même, en cours de session, des flux peuvent être libérés de manière permanente ou temporaire en raison, par exemple, de caractéristiques du réseau (e.g. priorisation de certains flux) ou d'incidents survenant dans le réseau (e.g. panne d'un équipement du réseau, saturation des ressources du réseau). Par la suite, les expressions « perte de flux » ou « inactivité du flux » seront indifféremment utilisées pour désigner le non-établissement ou la libération prématurée d'un flux associé à une session. L'inactivité d'un flux peut avoir un impact plus ou moins important sur la session à laquelle ce flux est associé. Selon le type de service duquel relève une session, un flux peut en effet s'avérer essentiel ou au contraire être de faible importance pour le maintien ou l'établissement de cette dernière.

Dans un réseau IMS (pour « IP Multimedia Subsystem »), de manière connue, une entité mandataire P-CSCF (pour « Proxy - Call Server Control Function ») peut demander à être notifiée d'événements relatifs à une session relative à un service. Le document de spécification TS 129 214 v7.4.0 de l'ETSI (pour « European Telecommunications Standards Institute ») prévoit notamment que l'entité mandataire P-CSCF puisse recevoir un message RAR (pour « Re-Authorization Request ») comprenant un champ «INDICATION _OF_LOSS_OF_BEARER» ou «INDICATION_OF_RELEASE_OF _BEARER» indiquant qu'un flux est inactif. En cas d'inactivité d'un tel flux au sein de la session, l'état de la technique ne propose cependant aucun mécanisme de contrôle de session qui soit adapté au service proposé via la session en cours ou à établir.

Le document US 2010/211666 concerne un procédé et un appareil pour demander une politique de transport pour un support d'une session dans un système de communication. Un nœud de demande de politique de transport selon ce document comprend un mécanisme de gestion d'événement adapté pour détecter un événement déclencheur déclenchant la sélection d'une politique de transport pour le support d'un service ; un mécanisme de sélection de politique de transport adapté pour sélectionner une politique de transport et transmettre une demande de politique indicative de la politique de transport à une fonction de décision de politique.

Un des buts de l'invention est de remédier à des insuffisances/inconvénients de l'état de la technique et/ou d'y apporter des améliorations.

L'invention concerne un procédé de contrôle tel que défini dans la revendication 1, une entité de contrôle primaire telle que définie dans la revendication 8 et une entité de contrôle secondaire telle que définie dans la revendication 11 pour contrôler une session de fourniture d'un service entre deux entités.

Le procédé de contrôle permet ainsi d'obtenir une politique de contrôle de session relative à un service et d'agir sur la session en cours, ou à établir, en fonction du type de ce service. Le message de contrôle de session est par exemple relatif à une session entre une entité appelante et une entité appelée, et reçu depuis l'entité appelante, l'entité appelée ou encore depuis une entité intermédiaire du réseau située sur un chemin réseau entre l'entité appelante et l'entité appelée. Le procédé permet avantageusement de transmettre la politique de contrôle de session depuis une entité en charge du contrôle du service (e.g. un serveur d'application ou AS pour « Application Server » en anglais) à une entité tierce (e.g. P-CSCF, terminal utilisateur) afin que cette dernière mette en œuvre la politique de contrôle de session. Le procédé permet notamment de subordonner des actions à mettre en œuvre au niveau de la session en cas d'une inactivité détectée d'un flux de cette session, à une politique obtenue ou générée par l'entité en charge du contrôle du service. Une politique de contrôle de session adaptée au service fourni par la session peut ainsi être mise en œuvre.

Selon une caractéristique particulière, la politique de contrôle de session appartient au groupe comprenant une libération immédiate de la session, une libération différée de la session, un maintien de la session, et une tentative de rétablissement d'un flux de la session.

De nombreuses politiques de contrôle de session sont envisageables et peuvent être mises en œuvre par les entités réceptrices du message de contrôle de session. Le procédé en permettant de différencier les actions mises en œuvre en fonction du type de service fourni par la session, offre un contrôle de la session en cas d'inactivité d'un flux plus précis qu'avec une simple prise en compte du type de ce flux. Selon le service proposé, pour un même type de flux, une inactivité du flux peut ainsi donner lieu à différentes politiques de contrôle de session.

Le procédé permet ainsi de mettre en œuvre une politique de session adaptée au service proposé et au flux dont une inactivité a été détectée. Dans le cas par exemple où le service est un service de télésurveillance comprenant un flux vidéo et un flux audio, le flux audio étant considéré secondaire par rapport au flux vidéo, une inactivité du flux audio conduit avantageusement à mettre en œuvre un maintien de la session, tandis qu'une inactivité du flux vidéo conduit à une tentative de rétablissement de ce dernier flux. Au contraire, dans le cas par exemple d'un service de visioconférence comprenant un flux vidéo, un flux audio et un flux de sous-titrages, le flux audio étant considéré essentiel au maintien de la session, une inactivité de ce dernier conduit à une libération différée ou immédiate de la session.

Selon une caractéristique particulière, la politique de contrôle de session est définie par un attribut d'une description d'un flux de la session, comprise dans une offre ou une réponse SDP associée au message de contrôle de session.

L'obtention de la politique de contrôle à partir d'une offre ou d'une réponse SDP, permet une mise en œuvre aisée du procédé. Un message SDP peut en particulier facilement être encapsulé dans un message de contrôle d'un protocole de couche supérieure utilisant le protocole SDP. Il n'est pas nécessaire de prévoir des extensions à un tel protocole pour mettre en œuvre le procédé. Pour une entité de contrôle de type MGCF (pour « Media Gateway Control Function ») communiquant avec une entité média de type IMS-MGW (pour « IP Multimedia Subsystem - Media Gateway ») par l'intermédiaire du protocole H.248, il est par exemple possible d'intégrer l'offre ou la réponse SDP contenant la politique de contrôle directement dans un message de contrôle de ressources H.248. Une compatibilité du procédé avec de nombreux protocoles est ainsi assurée.

En outre, l'utilisation d'un attribut pour définir la politique de contrôle de session directement dans la description d'un flux contenue dans l'offre ou la réponse SDP, offre une lisibilité facilitée de cette information.

Selon une caractéristique particulière, la politique de contrôle de session est comprise dans un entête du message de contrôle de session.

L'obtention de la politique de contrôle de session à partir d'un entête du message de contrôle de session permet de regrouper l'ensemble des politiques de contrôle de session relatives aux flux d'une même session en un même endroit. Il est en particulier possible de prédéterminer les politiques associées aux flux décrits dans une offre ou une réponse SDP sans analyse préalable de cette offre ou réponse SDP.

En outre, il n'est pas nécessaire de prévoir un attribut spécifique dans l'offre ou la réponse SDP pour définir une politique de contrôle de session en cas d'inactivité d'un flux. Le procédé peut ainsi être mis en œuvre avec des entités générant des messages SDP selon des techniques connues.

Selon une caractéristique particulière, la politique de contrôle de session est mise en œuvre sur détection d'une inactivité d'un flux de données appartenant au groupe comprenant un flux multimédia et un flux de contrôle.

Selon une caractéristique particulière, le message de contrôle de session est un message SIP.

Selon une caractéristique particulière de l'entité de contrôle primaire, le module d'obtention est agencé pour obtenir la politique de contrôle de session à partir d'une offre ou d'une réponse SDP comprise dans le message de contrôle de session, la politique de contrôle de session étant un attribut d'une description d'un flux de la session contenue dans l'offre ou la réponse SDP.

Selon une caractéristique particulière de l'entité de contrôle primaire, le module d'obtention est agencé pour obtenir la politique de contrôle de session à partir d'un entête du message de contrôle de session.

Selon une caractéristique particulière de l'entité de contrôle secondaire, le module de mise en œuvre est agencé pour exécuter ou commander une libération immédiate de la session de fourniture d'un certain service, une libération différée de la session de fourniture d'un certain service, un maintien de la session de fourniture d'un certain service, ou une tentative de rétablissement d'un flux de la session de fourniture d'un certain service.

Selon une caractéristique particulière, l'entité de contrôle secondaire, comprend en outre un module de détection agencé pour détecter une inactivité d'au moins un flux de la session de fourniture d'un certain service.

Selon un autre aspect, l'invention concerne un système de contrôle d'une session de fourniture d'un certain service dans un réseau de communication. Ledit système comprend :
- une entité de contrôle primaire selon l'invention ; et
- une entité de contrôle secondaire selon l'invention.

Cette entité de contrôle secondaire met en œuvre, sur détection d'une inactivité d'au moins un flux d'une session de fourniture d'un certain service, une politique de contrôle de session reçue de l'entité de contrôle primaire pour la session.

Les avantages énoncés pour le procédé de contrôle de session sont directement transposables aux entités de contrôle primaire et secondaire, ainsi qu'au système de contrôle.

L'invention sera mieux comprise à l'aide de la description suivante de modes de réalisation particuliers, en référence aux dessins annexés sur lesquels :
- la figure 1 représente un réseau de communication IMS (pour « IP Multimedia Subsystem ») selon un mode particulier de réalisation ;
- la figure 2a représente des étapes d'un procédé de contrôle de session de fourniture d'un service, mis en œuvre par des entités d'un réseau de communication IMS selon un premier mode particulier de réalisation ;
- la figue 2b représente des étapes d'un procédé de contrôle de session de fourniture d'un service, mis en œuvre par des entités d'un réseau de communication IMS selon un deuxième mode particulier de réalisation ;
- le figure 3 représente une entité de contrôle, dite « entité primaire de contrôle », selon un mode particulier de réalisation ;

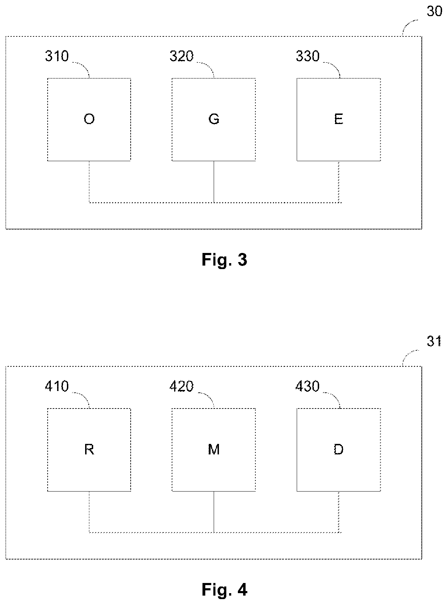

- la figure 4 représente une entité de contrôle, dite « entité secondaire de contrôle », selon un deuxième mode particulier de réalisation.

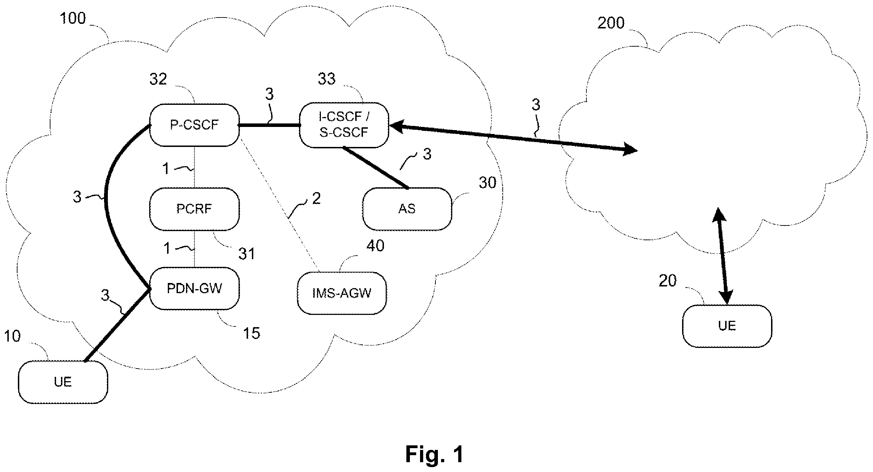

La **figure 1** représente un réseau de communication IMS 100 dans lequel des entités de contrôle selon l'invention mettent en œuvre un procédé de contrôle d'une session de fourniture d'un service, entre une entité appelante 10 du réseau de communication IMS 100 et une entité appelée 20 d'un réseau de communication IMS 200. Une architecture de réseau IMS telle que définie par le groupe de normalisation 3GPP (pour 3rd « Generation Partnership Project ») permet l'établissement et le contrôle de sessions entre des entités réseaux, ainsi que la réservation de ressources pour des flux de données au niveau d'un réseau de transport de données. Grâce à cette architecture, les opérateurs de réseaux peuvent commodément contrôler la qualité de service offerte. L'architecture IMS permet d'offrir des services de type téléphonie, visiophonie, présence, messagerie instantanée, ou télévision, et gère également l'interaction de ces services. Elle met généralement en œuvre le protocole SIP (pour « Session Initiation Protocol »), tel que défini par l'IETF (pour « Internet Engineering Task Force ») dans le document RFC 3261 en tant que protocole de gestion de sessions, lequel permet l'établissement, la modification et la terminaison de sessions dans un réseau utilisant le protocole IP.

Le réseau de communication 100 comprend plus particulièrement des entités de contrôle 30-33, une entité média 40, et une entité à la fois média et de contrôle 15. Les entités de contrôle et entités médias sont respectivement des entités aptes à traiter des messages de signalisation relatifs à la session de fourniture de service, et des entités aptes à traiter le transport de données relatives à la session de fourniture de service. Les entités de contrôles sont dîtes appartenir à un plan de contrôle, tandis que les entités médias sont dîtes appartenir à un plan média.

A titre d'exemple, l'entité de contrôle 30 est un serveur d'application AS (pour «Application Server »), l'entité de contrôle 31 est une entité de contrôle de règles PCRF (pour « Policy Control and Charging Rules Function »), l'entité de contrôle 32 est un serveur mandataire P-CSCF (pour « Proxy - Call Server Control Function »), l'entité de contrôle 33 est une entité regroupant des fonctions d'interrogation I-CSCF (pour « Interrogating - Call Server Control Function ») et des fonctions d'enregistrement S-CSCF (pour « Serving - Call Server Control Function »), l'entité à la fois média et de contrôle 15 est une passerelle PDN-GW (pour « Packet Data Network - Gateway), et l'entité média 40 est une passerelle IMS-AGW (pour «IMS- Access Gateway »).

Les entités du réseau de communication IMS 100 sont mises en œuvre pour gérer la session entre l'entité appelante 10 et l'entité appelée 20. L'entité appelante 10 est abonnée au réseau de communication IMS 100 auquel elle accède par l'intermédiaire de la passerelle PDN-GW 15. L'entité appelée 20 est abonnée au réseau de communication IMS 200.

Dans le mode de réalisation décrit, l'entité de contrôle 32 sert d'entité de raccordement entre le cœur du réseau de communication IMS 100 et le réseau d'accès utilisé par l'entité appelante 10, et est apte à retransmettre tous les messages de signalisation entre l'entité appelante 10 et l'entité de contrôle 33. L'entité de contrôle 32 communique en outre avec l'entité média 40.

L'entité de contrôle 33 permet notamment d'interroger un serveur d'abonnés (non représenté) afin de gérer la procédure d'enregistrement de l'entité appelante 10. Elle permet également de solliciter l'entité de contrôle 30 pour mettre en œuvre un ou plusieurs services associés à la session de fourniture de service.

L'entité de contrôle 31 est chargée d'adapter et de contrôler l'usage des ressources réseaux du réseau de communication 100 en fournissant des règles de contrôle de la session en fonction par exemple des services requis par l'entité appelante 10 ou de son profil d'abonné.

Les échanges entre respectivement, l'entité appelante 10 et la passerelle PDN-GW 15, la passerelle PDN-GW 15 et l'entité de contrôle 32, l'entité de contrôle 32 et l'entité de contrôle 33, l'entité de contrôle 33 et l'entité de contrôle 30, et entre l'entité de contrôle 33 et le réseau de communication IMS 200, sont des messages de signalisation SIP 3.

Les échanges entre d'une part l'entité de contrôle 31 et l'entité de contrôle 32, et d'autre part entre la passerelle PDN-GW 15 et l'entité de contrôle 31 sont réalisés par des messages de signalisation Diameter 1 tels que défini dans le document de l'IETF RFC 6733.

Les échanges entre l'entité de contrôle 32 et l'entité média 40 sont quant à eux supportés par des messages de signalisation 2 conformes au protocole H.248 défini par le groupe de travail UIT-T de l'UIT (pour « Union Internationale des Télécommunications »).

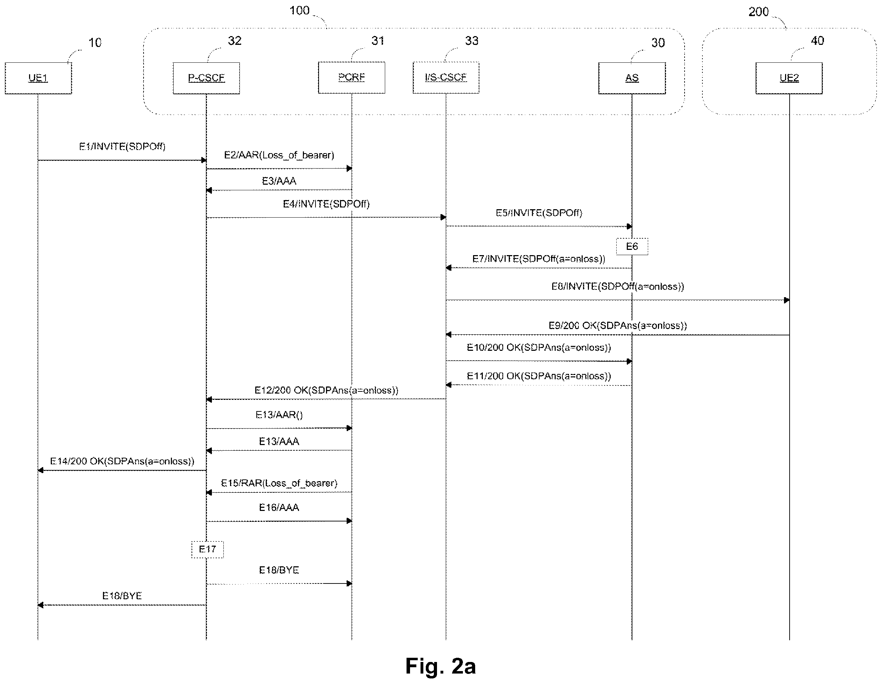

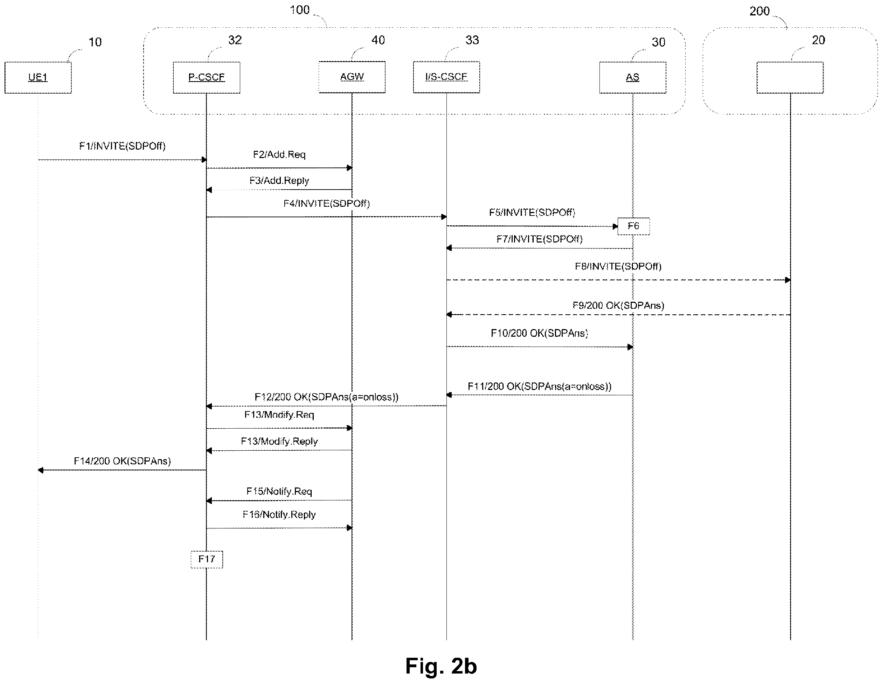

Le procédé de contrôle de session est plus particulièrement mis en œuvre par les entités de contrôle 30 et 32, qui par la suite seront respectivement dite « entité primaire de contrôle » et « entité secondaire de contrôle ». Ces entités forment un système de contrôle d'une session de fourniture d'un certain service. Ceci sera détaillé par la suite en relation avec la figure 2.

Il est par ailleurs à noter que la figure 1 est une représentation simplifiée du réseau de communication IMS 100. Aucune limitation n'est attachée au nombre d'entités de contrôle et d'entités médias appartenant au réseau de communication IMS 100.

Les entités du réseau de communication IMS 200 sont similaires à celles du réseau de communication IMS 100 et n'ont pas été représentées afin de ne pas alourdir la figure 1.

Dans une autre configuration réseau, certaines entités de contrôle peuvent en outre être regroupées au sein d'une même entité. De même, certaines fonctions assurées par une même entité peuvent être dissociées et mises en œuvre par des entités distinctes. C'est par exemple le cas des fonctions d'interrogation I-CSCF et d'enregistrement S-CSCF de l'entité de contrôle 33.

Dans encore une autre configuration réseau, le procédé de contrôle de session est mis en œuvre par des entités localisées dans le réseau de communication IMS 100 et dans le réseau de communication IMS 200. En particulier, le procédé de contrôle de session ne requiert pas que les entités le mettant en œuvre appartiennent à un même réseau de communication.

La figure 2a représente des étapes d'un procédé de contrôle de session de fourniture d'un service, mis en œuvre par des entités d'un réseau de communication IMS selon un premier mode particulier de réalisation. Par la suite, on se place dans une configuration réseau telle que celle décrite en relation avec la figure 1.

Dans ce premier mode de réalisation, la session de fourniture de service est à titre d'exemple établie entre l'entité appelante 10 (e.g. robot d'appel) du réseau de communication IMS 100 et une entité appelée 20 localisée dans le réseau de communication IMS 200 d'un site distant. La session fournit un service de télésurveillance de ce site distant.

La session comprend par exemple trois flux de données, à savoir un flux vidéo permettant de transmettre des images du site distant sous surveillance, un flux audio permettant de transmettre des sons ambiants du site distant sous surveillance, et un flux de messagerie instantanée permettant de transmettre d'une part des informations obtenues depuis différents capteurs localisés sur le site distant sous surveillance, et d'autre part des messages de contrôle depuis l'entité appelante 10 (e.g. commande de déclenchement d'une alarme).

Lors d'une étape E1, l'entité appelante 10 envoie un message de contrôle de session SIP « INVITE » comprenant une offre SDP à destination de l'entité appelée 20 localisée dans le réseau de communication IMS 200. Ce message a pour but d'établir la session de télésurveillance entre l'entité appelante 10 et l'entité appelée 20. Le message de contrôle de session SIP « INVITE » envoyé a par exemple le contenu suivant :

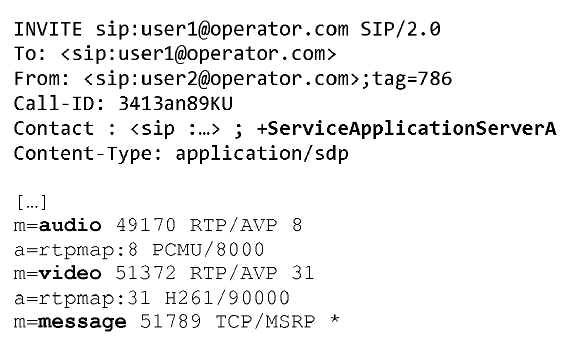

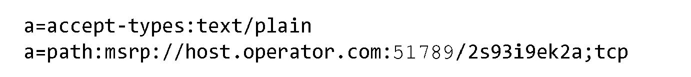

Un entête du message de contrôle de session SIP « INVITE » indique plus particulièrement que la session que souhaite établir l'entité appelante 10 est une session de télésurveillance. Ceci est indiqué par l'entête « Contact » du message de contrôle de session SIP « INVITE » qui comprend la valeur « ServiceApplicationServerA ».

L'offre SDP contenue dans le message de contrôle de session SIP « INVITE » comprend en outre trois descriptions de flux de données chacune identifiée par la lettre « m ». La première description décrit un flux audio, la deuxième un flux vidéo, et la troisième un flux de messagerie instantanée.

On notera qu'à ce stade, le message de contrôle de session SIP « INVITE » ne contient aucune politique de contrôle de session.

Lors d'une étape E2, l'entité secondaire de contrôle 32 (un serveur mandataire P-CSCF) reçoit le message de contrôle de session « INVITE » émis par l'entité appelante 10. L'entité secondaire de contrôle 32 émet alors une demande de réservation de flux, pour les trois flux de données de l'offre SDP, auprès de l'entité de contrôle 31 (entité de contrôle de règles PCRF). La demande de réservation de flux est plus précisément un message de contrôle de ressources Diameter «AAR» (pour « AA-Request ») tel que défini dans le document RFC 4005. A titre d'exemple le message de contrôle de ressources Diameter « AAR » a le contenu suivant :

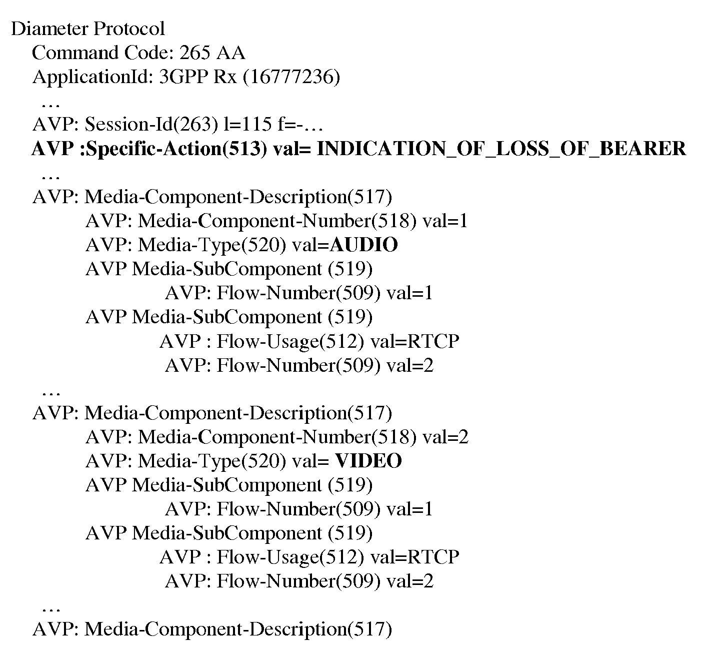

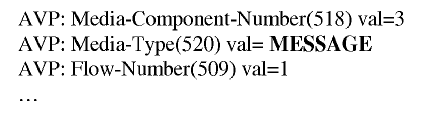

Le message de contrôle de ressources Diameter « AAR » comprend en outre un champ « INDICATION_OF_LOSS_OF_BEARER » indiquant que l'entité secondaire de contrôle 32 demande à être notifiée par l'entité de contrôle 31 des évènements de perte de flux.

Lors d'une étape E3, l'entité de contrôle 31 envoie un message d'acquittement de la demande de réservation de flux à l'entité secondaire de contrôle 32. Ce message d'acquittement est un message de contrôle de ressources Diameter « AAA » (pour « AA-Answer ») tel que défini dans le document RFC 4005.

Lors d'une étape E4, l'entité secondaire de contrôle 32 relaye le message de contrôle de session SIP « INVITE » vers l'entité de contrôle 33 (entité supportant des fonctions d'interrogation I-CSCF et d'enregistrement S-CSCF).

Lors d'une étape E5, l'entité de contrôle 33 reçoit le message de contrôle de session SIP « INVITE », et détermine à partir de l'entête « Contact » comprenant la valeur « ServiceApplicationServerA », qu'un service de télésurveillance est à mettre en œuvre. L'entité de contrôle 33 transmet alors le message de contrôle de session SIP « INVITE » à l'entité primaire de contrôle 30 (serveur d'application AS).

Lors d'une étape E6, l'entité primaire de contrôle 30 reçoit le message de contrôle de session SIP « INVITE » et identifie les trois flux de données contenus dans l'offre SDP. En fonction du type de service, l'entité primaire de contrôle 30 détermine, à l'aide par exemple d'un paramétrage défini localement, que le service de télésurveillance ne peut être fourni sans les flux vidéo RTP (pour « Real-time Transport Protocol ») et de messagerie instantanée, mais qu'en revanche le flux audio ou le flux vidéo RTCP (pour « Real-time Transport Control Protocol ») ne sont pas requis pour le maintien d'une telle session. Le paramétrage est par exemple défini à l'aide d'une table mémorisant certains types de services en association avec des actions possibles en cas d'inactivité de certains types de flux relatifs à ces services. Une telle table a par exemple le format suivant :

| **Type_Service** | **Type_Flux** | **Sous-type_Flux** | **Politique_Session** |
|---|---|---|---|
| télésurveillance | audio | * | keep |
| télésurveillance | video | rtcp | keep |
| télésurveillance | video | rtp | retry |
| télésurveillance | message | * | release |
| visioconférence | audio | * | wait 30 |
| visioconférence | video | * | keep |
| visioconférence | message | * | keep |

Les colonnes « Type_Service », « Type_Flux», « Sous-type_Flux » et « Politique_Session » indiquent respectivement un type de service fourni par la session, un type de flux de données possible pour le service considéré, un sous-type pour le flux considéré, et une politique de contrôle session. A un triplet (Type_Service, Type_Flux, Sous-type_Flux) correspond une politique de contrôle de session. Cette dernière politique de contrôle est mise en œuvre pour la session en cas d'inactivité du flux défini par les colonnes « Type_Flux » et « Sous-type Flux ». Les politiques de contrôle de session appartiennent au groupe comprenant une libération immédiate de la session (indiqué dans la colonne « Politique_Session » par la valeur « release »), une libération différée de la session (indiqué dans la colonne « Politique_Session » par la valeur « wait x », où x est un nombre de secondes avant libération effective de la session), un maintien de la session (indiqué dans la colonne « Politique_Session » par la valeur «keep»), et une tentative de rétablissement d'un flux de la session (indiqué dans la colonne « Politique_Session » par la valeur « retry »). La table indique ainsi que pour un service de télésurveillance, la session doit être maintenue en cas d'inactivité d'un flux audio quelconque ou d'un flux vidéo RTCP, libérée en cas d'inactivité d'un flux de messagerie instantanée quelconque, et qu'une tentative de rétablissement de la session doit être mise en œuvre en cas d'inactivité d'un flux vidéo RTP. De même, pour un service de visioconférence, la table indique que la session doit être libérée au bout de 30 secondes en cas d'inactivité d'un flux audio quelconque, mais qu'elle peut être maintenue en cas d'inactivité d'un flux vidéo ou d'un flux de messagerie instantanée quelconque.

Lors d'une étape E7, l'entité primaire de contrôle 30 complète l'offre SDP contenue dans le message de contrôle de session SIP « INVITE » à l'aide d'un attribut « a=on-loss » inséré dans les descriptions des flux audio, vidéo et de messagerie instantanée. Cet attribut indique la politique de contrôle à mettre en œuvre en cas d'inactivité du flux auquel il est associé. L'entité primaire de contrôle 30 génère ainsi, pour chaque flux de données, en fonction du type de service fourni, une politique de contrôle de session à mettre en œuvre en cas d'inactivité de ce flux, c'est-à-dire en cas de non-établissement ou de libération prématurée du flux. Le message de contrôle de session SIP « INVITE » contient alors une nouvelle offre SDP. Le message de contrôle de session SIP « INVITE » résultant a, par exemple, le contenu suivant :

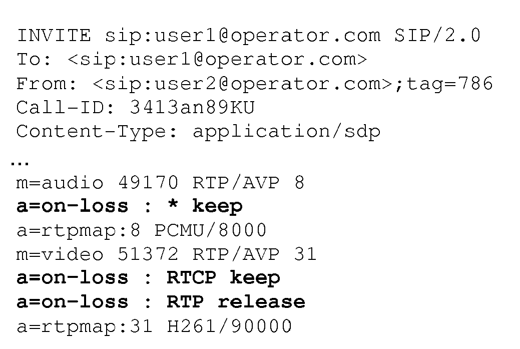

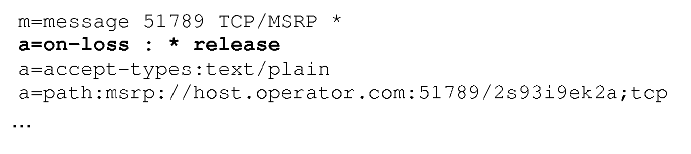

Une fois les politiques de contrôle de session générées et insérées dans le message de contrôle de session SIP « INVITE », l'entité primaire de contrôle 30 retourne le message de contrôle de session SIP « INVITE » à l'entité de contrôle 33.

Lors d'une étape E8, l'entité de contrôle 33 achemine le message de contrôle de session SIP « INVITE » à destination de l'entité appelée 20 du réseau de communication IMS 200.

Lors d'une étape E9, un message de contrôle de session SIP «200 OK» en provenance du réseau de communication IMS 200 est reçu par l'entité de contrôle 33. Ce message d'acquittement contient une réponse SDP comprenant les mêmes attributs que ceux contenus dans l'offre SDP précédemment décrite. Le message de contrôle de session SIP «200 OK» a par exemple le format suivant :

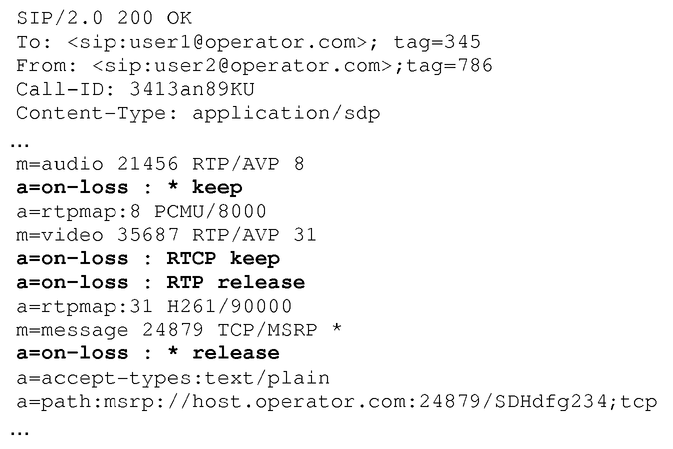

Lors d'une étape E10, l'entité de contrôle 33 relaye le message de contrôle de session SIP «200 OK» auprès de l'entité primaire de contrôle 30.

L'entité primaire de contrôle 30 reçoit le message de contrôle de session SIP « 200 OK » et le renvoie à son tour sans le modifier lors d'une étape E11 à l'entité de contrôle 33, qui elle-même le relaye lors d'une étape E12 à l'entité secondaire de contrôle 32 en charge de mettre en œuvre ladite politique de contrôle de session en cas d'inactivité d'un flux de la session de fourniture de service.

Lors d'une étape E13, après réception du message de contrôle de session SIP «200 OK », l'entité secondaire de contrôle 32 émet une demande de modification de flux auprès de l'entité de contrôle 31 afin de tenir compte des informations contenues dans le message de contrôle de session SIP « 200 OK », et de mettre à jour les flux précédemment réservés. La demande de réservation de flux est réalisée de la même manière qu'à l'étape E2, par l'envoi d'un message de contrôle de ressources Diameter « AAR ».

Lors d'une étape E14, l'entité secondaire de contrôle 32 transmet le message de contrôle de session SIP « 200 OK » à l'entité appelante 10. Cette dernière entité est ainsi informée des politiques de contrôle de session pouvant être mises en œuvre par le réseau de communication IMS 100 en cas d'inactivité d'un flux de la session. L'entité appelante 10 peut avantageusement utiliser à son tour les informations obtenues quant aux politiques de contrôle de session afin d'interpréter ces dernières localement et de prévoir par exemple un traitement local particulier en cas de libération de la session suite à l'inactivité d'un flux détectée par le réseau de communication IMS 100.

Lors d'une étape E15, l'entité de contrôle 31 détecte l'inactivité du flux de messagerie instantanée. Cette inactivité est par exemple déterminée par l'expiration d'une temporisation après un nombre de secondes prédéfinies au bout de laquelle un flux est considéré inactif si aucun paquet de données relatif à ce flux n'a été reçu. Un message indiquant l'inactivité du flux est alors émis par l'entité de contrôle 31, à l'entité secondaire de contrôle 32. Ce message est par exemple un message Diameter «RAR», contenant un champ « Specific-Action» avec la valeur « INDICATION_OF_LOSS_OF_BEARER», et indiquant qu'une perte de flux s'est produite pour le flux identifié par les champs « Media-Component-Number » et « Flow-Number », à savoir le flux de messagerie instantanée. Le message Diameter, à titre d'exemple, a le format suivant :

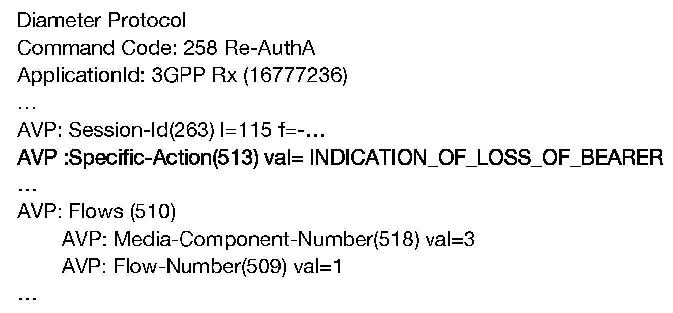

Lors d'une étape E16, l'entité secondaire de contrôle 32 reçoit le message Diameter «RAR» et est ainsi notifiée de la perte du flux de messagerie instantanée. L'entité secondaire de contrôle 32 acquitte le message Diameter « RAR » reçu en envoyant à l'entité de contrôle 31 un message Diameter « AAA ».

Lors d'une étape E17, l'entité secondaire de contrôle 32 met en œuvre la politique de contrôle de session obtenue depuis l'offre SDP à l'étape E12, et correspondant à une inactivité du flux de messagerie instantanée. Cette politique de contrôle de session consiste plus particulièrement à libérer la session, ce qui est indiqué par la ligne « on-loss : ^{∗} release » de la description du flux de messagerie instantanée contenue dans l'offre SDP.

La mise en œuvre de la politique de contrôle de session pour une inactivité du flux de messagerie instantanée se traduit, lors d'une étape E18, par l'envoi par l'entité secondaire de contrôle 32 d'un message de clôture de session à l'entité appelante 10 et à l'entité de contrôle 31.

Dans un autre mode de réalisation, les politiques de contrôle de session sont directement insérées dans un entête d'un message de contrôle de session SIP, par exemple un entête « Media-Loss-Actions », plutôt que dans une offre ou une réponse SDP contenue dans ce message. Les politiques de contrôle de session correspondent alors à une liste ordonnée de valeurs dont l'ordre correspond à l'ordre des descriptions de flux associés à la session dans l'offre ou la réponse SDP contenue dans le message de contrôle de session SIP. Les valeurs de la liste indiquent alors une politique de contrôle de session pour chacun des flux au sein de la session selon l'ordre de la liste. Plus précisément, à une n-ième description de flux d'une offre ou réponse SDP correspond la n-ième politique de contrôle de session de la liste de valeurs associées à l'entête « Media-Loss-Actions ». A titre d'exemple, un message de contrôle de session SIP « INVITE » selon ce mode de réalisation a la forme suivante :

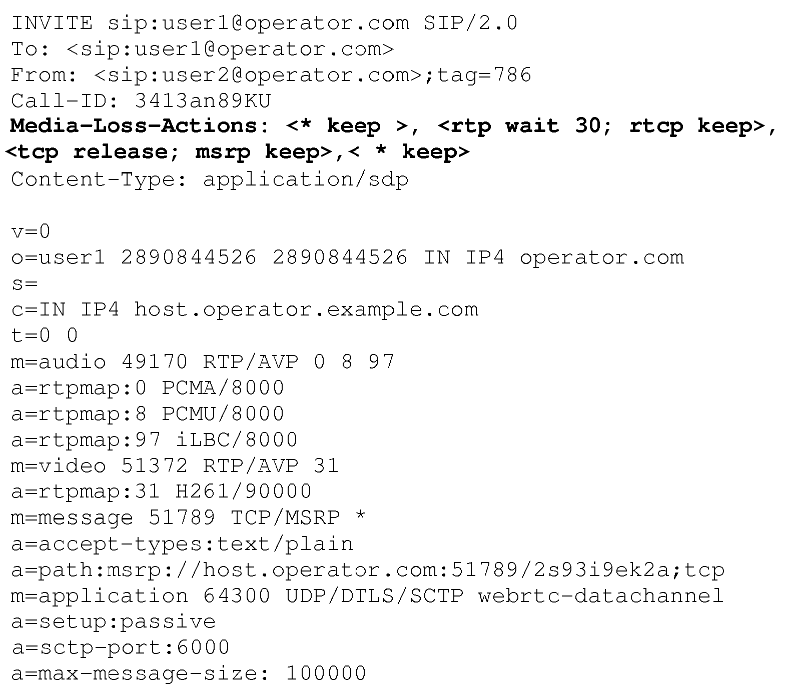

Dans un autre mode de réalisation, à l'étape E9, une entité du réseau de communication IMS 200 indique dans sa réponse SDP des attributs valorisés différents de ceux compris dans l'offre SDP qu'il a reçu. Le réseau de communication IMS 200 peut ainsi proposer des politiques de contrôle de session différentes de celles proposées ou retenues par une entité de contrôle du réseau de communication IMS 100.

Dans un autre mode de réalisation, une politique de contrôle de session est insérée par l'entité appelante 10 dans l'offre SDP envoyée à l'étape E1. A l'étape E6, l'entité primaire de contrôle 30, selon un paramétrage prédéfini, peut alors modifier la politique de contrôle de session décrite dans l'offre SDP ou encore la conserver telle qu'indiquée par l'entité appelante 10. Dans ce dernier cas, l'entité primaire de contrôle 30 obtient la politique de contrôle de session directement à partir du message de contrôle de session SIP « INVITE » reçu.

Dans un autre mode de réalisation, l'entité primaire de contrôle 30 et l'entité secondaire de contrôle 32 sont une même entité. L'entité de contrôle obtenant à partir d'un message de contrôle de session, ou générant, la politique de contrôle de session, est également celle qui la met en œuvre.

Le procédé a été décrit pour une mise en œuvre d'un service de télésurveillance, il n'existe cependant aucune limitation au type de service bénéficiant d'un contrôle de session.

De même, le procédé a été décrit avec une mise en œuvre dans un réseau de communication IMS 100. Il n'existe cependant pas de limitation quant au nombre de réseaux de communication dans lesquels le procédé est mis en œuvre. Le procédé peut par exemple aisément être mis en œuvre avec des entités de contrôle réparties dans plusieurs réseaux distincts.

Il n'existe par ailleurs aucune limitation quant aux entités de contrôle susceptibles de mettre en œuvre le procédé décrit. Une telle entité de contrôle appartient par exemple au groupe d'entités de contrôle suivant : entité P-CSCF (pour « Proxy - Call Server Control Function »), entité I-CSCF (pour « Interrogating - Call Server Control Function »), entité S-CSCF (« Serving - Call Server Control Function »), entité AS (pour « Application Server »), entité MGCF (pour « Média Gateway Controller Function »), entité IBCF (pour « Interconnection Border Control Function »), terminal utilisateur.

Les précédents modes de réalisation ont été décrits pour le traitement d'un message de contrôle de session SIP « INVITE » et d'un message de réponse correspondant SIP «200 OK ». Il n'existe cependant pas de limitations quant aux types de requêtes de service traitées. Le procédé de traitement mis en œuvre par exemple pour une requête SIP « UPDATE » est équivalent à celui mis en œuvre pour traiter une requête SIP « INVITE ».

La **figure 2b** représente des étapes d'un procédé de contrôle de session de fourniture d'un service, mis en œuvre par des entités d'un réseau de communication IMS selon un deuxième mode particulier de réalisation. Par la suite, on se place à nouveau dans une configuration réseau telle que celle décrite en relation avec la figure 1.

Dans ce deuxième mode de réalisation, la session de fourniture de service est, de même que décrit précédemment en relation avec la figure 2a, une session fournissant un service de télésurveillance, établie entre l'entité appelante 10 (e.g. robot d'appel) du réseau de communication IMS 100 et une entité appelée 20 localisée dans le réseau de communication IMS 200 d'un site distant. On considère, de même que précédemment, que la session comprend trois flux de données : un flux vidéo, un flux audio, et un flux de messagerie instantanée.

A la différence du premier mode de réalisation, l'entité détectant une inactivité d'un flux et la notifiant à l'entité secondaire de contrôle 32 est une entité média 40, à titre d'exemple, une passerelle IMS-AGW. Les autres entités sont identiques au premier mode de réalisation.

Lors d'une étape F1 identique à l'étape E1 précédemment décrite, l'entité appelante 10 envoie un message de contrôle de session SIP « INVITE » comprenant une offre SDP à destination de l'entité appelée 20 localisée dans le réseau de communication IMS 200.

Lors d'une étape F2, l'entité secondaire de contrôle 32 reçoit le message de contrôle de session « INVITE » émis par l'entité appelante 10. L'entité secondaire de contrôle 32 émet alors une demande de réservation de flux, pour les trois flux de données de l'offre SDP, auprès de l'entité de contrôle 40. La demande de réservation de flux est plus précisément un message de contrôle de ressources H.248 «Add Request » tel que défini dans le document H.248.1 de l'ITU-T. A titre d'exemple le message de contrôle de ressources H.248 «Add Request» a le contenu suivant :

```
 MEGACO/2 [172.20.214.26]:2953
 Transaction=14289{
 Context=63967{
 Add=Term1{
 Media{
 Stream=1{
 LocalControl{ event=1111{adid/ipstop{dt=60}}...
 Local{
 v=..
 c=...
 m=audio ...
 ... }}
 Stream=2{
 LocalControl{ event=2222{adid/ipstop{dt=60}}...
 Local{
 v=..
 c=...
 m=video ...
 ... }}
 Stream=3{
 LocalControl{ event=3333{adid/ipstop{dt=60}}...
 Local{
 v=..
 c=...
 m=message ......
 }}
 }},
```

Le message de contrôle de ressources H.248 «Add Request » comprend en outre pour chaque flux une indication « adid/ipstop{dt=60} » indiquant que l'entité secondaire de contrôle 32 demande à être notifiée par l'entité de contrôle 40 des évènements de perte de flux. Plus précisément, un flux est considéré perdu lorsqu'aucun paquet relatif à ce flux n'est reçu dans un délai de 60 secondes.

Lors d'une étape F3, l'entité de contrôle 40 envoie un message de contrôle de ressources H.248 « Add Reply», d'acquittement de la demande de réservation de flux à l'entité secondaire de contrôle 32.

Des étapes F4 à F6 sont ensuite mises en œuvre. Ces étapes sont identiques aux étapes E4 et E6 précédemment décrites en relation avec la figure 2a.

Lors d'une étape F7, à la différence du premier mode de réalisation, l'entité primaire de contrôle 30 ne complète pas l'offre SDP contenue dans le message de contrôle de session SIP « INVITE » avec les politiques de contrôle de session en cas d'inactivité d'un flux déterminées à l'étape précédente. L'entité primaire de contrôle 30 retourne le message de contrôle de session SIP « INVITE » à l'entité de contrôle 33 sans le modifier. Ceci permet avantageusement de ne pas communiquer les politiques de contrôle de session au réseau de communication de l'entité appelée 20.

Des étapes F8 à F10 sont ensuite mises en œuvre de façon similaire aux étapes E8 à E10 précédemment décrites en relation avec la figure 2a, à ceci près que les messages de contrôle de session SIP échangés ne comprennent pas de politiques de contrôle de session en cas d'inactivité de flux.

Lors d'une étape F11, l'entité primaire de contrôle 30, après avoir reçu un message de contrôle de session SIP «200 OK » contenant une réponse SDP en provenance du réseau de communication IMS 200, complète cette réponse SDP à l'aide d'un attribut « a=on-loss » inséré dans les descriptions des flux audio, vidéo et de messagerie instantanée. Cet attribut indique la politique de contrôle à mettre en œuvre en cas d'inactivité du flux auquel il est associé. L'entité primaire de contrôle 30 génère ainsi, pour chaque flux de données, en fonction du type de service fourni, une politique de contrôle de session à mettre en œuvre en cas d'inactivité de ce flux, c'est-à-dire en cas de non-établissement ou de libération prématurée du flux. Les politiques de contrôles de session en cas d'inactivité d'un flux sont dans ce deuxième mode de réalisation insérées à réception de la réponse SDP et permettent ainsi d'en préserver la confidentialité vis-à-vis du réseau de communication IMS 200. L'entité de contrôle 30 renvoie ensuite le message SIP modifié à l'entité de contrôle 33, qui elle-même le relaye lors d'une étape F12 à l'entité secondaire de contrôle 32 en charge de mettre en œuvre la politique de contrôle de session en cas d'inactivité d'un flux de la session de fourniture de service. Cette étape F12 est identique à l'étape E12 du premier mode de réalisation.

Lors d'une étape F13, après réception du message de contrôle de session SIP « 200 OK », l'entité secondaire de contrôle 32 émet une demande de modification de flux auprès de l'entité média 40 afin de tenir compte des informations contenues dans le message de contrôle de session SIP « 200 OK », et de mettre à jour les flux précédemment réservés. La demande de réservation de flux est réalisée de manière similaire à l'étape F2, par l'envoi d'un message de contrôle de ressources H.248 « Modify Request ».

L'entité secondaire de contrôle 32 transmet, lors d'une étape F14 identique à l'étape E14 du premier mode de réalisation, le message de contrôle de session SIP « 200 OK » à l'entité appelante 10.

Lors d'une étape F15, l'entité média 40 détecte l'inactivité du flux audio. Cette inactivité est déterminée par l'expiration de la temporisation prédéfinie à 60 secondes à l'étape F2. Un message indiquant l'inactivité du flux est alors émis par l'entité média 40, à l'entité secondaire de contrôle 32. Ce message est plus précisément un message H.248 « Notify Request » indiquant qu'une perte de flux s'est produite pour le flux audio identifié par l'attribut « Stream=1 ». Le message H.248 « Notify Request » a, à titre d'exemple, le format suivant :

```
 MEGACO/2 [172.20.214.23]:2953
 Transaction=4214{
 Context=63967{
 Notify=Term1{
 Media{
 Stream=1{
 LocalControl{ ObservedEvents=1111{20150315T22000000: adid/ipstop}...
 ...}}
```

Lors d'une étape F16, l'entité secondaire de contrôle 32 reçoit le message H.248 « Notify Request » et est ainsi notifiée de la perte du flux audio. L'entité secondaire de contrôle 32 acquitte le message H.248 « Notify Request » reçu en envoyant à l'entité média 40 un message H.248 « Notify Reply ».

Lors d'une étape F17, l'entité secondaire de contrôle 32 met en œuvre la politique de contrôle de session obtenue depuis la réponse SDP, et correspondant à une inactivité du flux audio. Cette politique de contrôle de session consiste plus particulièrement à maintenir la session, ce qui est indiqué par la ligne « on-loss : ^{∗} keep » de la description du flux audio contenue dans la réponse SDP. La politique de contrôle de session mise en œuvre revient ainsi à ne pas tenir compte de la perte du flux audio.

La **figure 3** représente une entité de contrôle 30, d'une session de fourniture d'un certain service, dite « entité primaire de contrôle ». L'entité primaire de contrôle 30 comprend :
- un module d'obtention 310 et/ou un module de génération 320, agencés pour obtenir à partir d'un message de contrôle de session, ou générer en fonction d'un type dudit service, une politique de contrôle de session à mettre en œuvre en cas d'inactivité d'au moins un flux de données, c'est-à-dire en cas de non-établissement ou de libération prématurée d'un flux de données associé à la session ;
- un module d'envoi 330, agencé pour envoyer dans un message de contrôle de session, la politique de contrôle de session à une entité de contrôle 31, dite « entité secondaire de contrôle », en charge de mettre en œuvre la politique de contrôle de session.

Dans un mode de réalisation particulier, le module d'obtention 310 est agencé pour obtenir la politique de contrôle de session à partir d'une offre ou d'une réponse SDP comprise dans le message de contrôle de session, la politique de contrôle de session étant un attribut d'une description d'un flux de la session contenue dans l'offre ou la réponse SDP.

Dans un autre mode de réalisation particulier, le module d'obtention 310 est agencé pour obtenir la politique de contrôle de session à partir d'un entête du message de contrôle de session.

La **figure 4** représente une entité de contrôle 31, dite « entité secondaire de contrôle ». Cette entité met en œuvre des signaux de contrôle de session. L'entité de contrôle 31 comprend :
- un module de réception 410, agencé pour recevoir une politique de contrôle de session à mettre en œuvre en cas d'inactivité d'au moins un flux de données, c'est-à-dire en cas de non-établissement ou de libération prématurée d'un flux de données associé à la session ;
- un module de mise en œuvre 420, agencé pour mettre en œuvre la politique de contrôle de session.

Dans un mode de réalisation particulier, le module de mise en œuvre 420 est agencé pour exécuter ou commander une libération immédiate de la session de fourniture d'un certain service, une libération différée de la session de fourniture d'un certain service, un maintien de la session de fourniture d'un certain service, ou une tentative de rétablissement d'un flux de la session de fourniture d'un certain service.

Dans un autre mode de réalisation particulier, l'entité de contrôle 31 comprend en outre un module de détection 430, agencé pour détecter une inactivité d'au moins un flux de la session de fourniture d'un certain service.

L'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 310, 320 et 330 sont agencés pour mettre en œuvre le procédé de contrôle précédemment décrit. Il s'agit de préférence de modules logiciels comprenant des instructions logicielles pour faire exécuter celles des étapes du procédé de contrôle précédemment décrit, mises en œuvre par une entité primaire de contrôle. L'invention concerne donc aussi :
- un programme pour une entité primaire de contrôle, comprenant des instructions de code de programme destinées à commander l'exécution des étapes du procédé de contrôle précédemment décrit, lorsque ledit programme est exécuté par ladite entité primaire de contrôle ;
- un support d'enregistrement lisible par une entité primaire de contrôle sur laquelle est enregistré le programme pour une entité primaire de contrôle.

De même, les modules 410, 420 et 430 sont agencés pour mettre en œuvre le procédé de contrôle précédemment décrit. Il s'agit de préférence de modules logiciels comprenant des instructions logicielles pour faire exécuter celles des étapes du procédé de contrôle précédemment décrit, mises en œuvre par une entité secondaire de contrôle. L'invention concerne donc aussi :
- un programme pour une entité secondaire de contrôle, comprenant des instructions de code de programme destinées à commander l'exécution des étapes du procédé de contrôle précédemment décrit, lorsque ledit programme est exécuté par ladite entité secondaire de contrôle;
- un support d'enregistrement lisible par une entité secondaire de contrôle sur laquelle est enregistré le programme pour une entité secondaire de contrôle.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé de contrôle d'une session de fourniture d'un service entre une première et une deuxième entités, au moins un flux de données étant associé à ladite session, ledit procédé comprenant, suite à l'émission d'un message de contrôle de session par la première entité, à destination de la deuxième entité :
- une insertion (E7, F11), dans ledit message de contrôle de session, par une entité dite primaire de contrôle située sur un chemin réseau entre les deux entités, d'une politique de contrôle de session à mettre en œuvre en cas d'inactivité d'au moins un flux de données associé à ladite session, ladite politique de contrôle de session ayant été obtenue (E6, F11) par ladite entité primaire de contrôle à partir d'une politique de contrôle de session insérée par la première entité dans ledit message de contrôle de session, ou ayant été générée (E6) par ladite entité primaire de contrôle en fonction d'un type dudit service, ladite inactivité dudit au moins un flux de données consistant en un non-établissement ou en une libération prématurée dudit au moins un flux de données;
- une obtention (E12,F13) dans ledit message de contrôle de session ou dans une réponse de la deuxième entité audit message de contrôle de session, de ladite politique de contrôle de session par une entité dite secondaire de contrôle (32) distincte de l'entité primaire de contrôle, située sur le chemin réseau entre les première et deuxième entités et en charge de mettre en œuvre ladite politique de contrôle de session ; et
- sur détection (E15, F15) d'une inactivité dudit flux de données, une mise en œuvre (E17, F17) de ladite politique de contrôle de session par l'entité secondaire de contrôle.

2. Procédé selon la revendication 1, dans lequel ladite politique de contrôle de session appartient au groupe comprenant une libération immédiate de la session, une libération différée de la session, un maintien de la session, et une tentative de rétablissement d'un flux de la session.

3. Procédé selon la revendication 1, dans lequel ladite politique de contrôle de session est définie par un attribut d'une description d'un flux de la session, comprise dans une offre ou une réponse SDP associée au message de contrôle de session.

4. Procédé selon la revendication 1, dans lequel ladite politique de contrôle de session est comprise dans un entête du message de contrôle de session.

5. Procédé selon la revendication 1, dans lequel ladite politique de contrôle de session est mise en œuvre sur détection d'une inactivité d'un flux de données appartenant au groupe comprenant un flux multimédia et un flux de contrôle.

6. Procédé selon la revendication 1, dans lequel ledit message de contrôle de session est un message SIP.

7. Procédé selon l'une quelconque des revendications 1 à 6 dans lequel ladite politique de contrôle de session est adaptée audit flux de données.

8. Entité dite « primaire » de contrôle (30), dans un réseau de communication, d'une session de fourniture d'un service entre une première et une deuxième entités, ladite entité primaire de contrôle étant située sur un chemin réseau entre les première et deuxième entités et comprenant :
- un module d'obtention (310) et/ou un module de génération (320), agencé pour obtenir à partir d'une politique de contrôle de session insérée dans un message de contrôle de session émis par la première entité à destination de la deuxième entité, ou pour générer en fonction d'un type dudit service, une politique de contrôle de session à mettre en œuvre en cas d'inactivité d'au moins un flux de données associé à la session, ladite inactivité consistant en un non-établissement ou en une libération prématurée dudit flux de données ;
- un module d'envoi (330), agencé pour insérer dans ledit message de contrôle de session ou dans une réponse de la deuxième entité audit message de contrôle de session, la politique de contrôle de session, celle-ci étant destinée à une entité dite secondaire de contrôle, distincte de l'entité primaire de contrôle, située sur le chemin réseau entre les première et deuxième entités et en charge de mettre en œuvre ladite politique de contrôle de session.

9. Entité de contrôle (30) selon la revendication 8, dans laquelle ledit module d'obtention (310) est agencé pour obtenir ladite politique de contrôle de session à partir d'une offre ou d'une réponse SDP comprise dans le message de contrôle de session, ladite politique de contrôle de session étant un attribut d'une description d'un flux de la session contenue dans ladite offre ou réponse SDP.

10. Entité de contrôle (30) selon la revendication 8, dans laquelle ledit module d'obtention (310) est agencé pour obtenir ladite politique de contrôle de session à partir d'un entête du message de contrôle de session.

11. Entité dite « secondaire » de contrôle (31), dans un réseau de communication, d'une session de fourniture d'un service entre une première et une deuxième entités, ladite entité secondaire de contrôle étant située sur un chemin réseau entre les première et deuxième entités et comprenant :
- un module de réception(410), agencé pour recevoir dans un message de contrôle de session émis par la première entité à destination de la deuxième entité ou dans une réponse de la deuxième entité audit message de contrôle de session, une politique de contrôle de session à mettre en œuvre en cas d'inactivité d'au moins un flux de données associé à la session, ladite inactivité consistant en un non-établissement ou une libération prématurée dudit flux de données, la politique de contrôle de session ayant été obtenue par une entité dite primaire de contrôle distincte de l'entité secondaire de contrôle, située sur le chemin réseau entre les deux entités, à partir d'une politique de contrôle de session insérée par la première entité dans ledit message de contrôle de session, ou ayant été générée par ladite entité primaire de contrôle en fonction d'un type dudit service et insérée par l'entité primaire de contrôle dans ledit message de contrôle de session ;
- un module de mise en œuvre (420), agencé pour mettre en œuvre ladite politique de contrôle de session si une inactivité du flux de données est détectée.

12. Entité de contrôle (31) selon la revendication 11, dans laquelle ledit module de mise en œuvre (420) est agencé pour exécuter ou commander une libération immédiate de ladite session de fourniture d'un certain service, une libération différée de ladite session de fourniture d'un certain service, un maintien de ladite session de fourniture d'un certain service, ou une tentative de rétablissement d'un flux de ladite session de fourniture d'un certain service.

13. Entité de contrôle (31) selon la revendication 11, comprenant en outre un module de détection (430) agencé pour détecter une inactivité d'au moins un flux de ladite session de fourniture d'un certain service.

14. Système de contrôle d'une session de fourniture d'un service entre deux entités dans un réseau de communication, comprenant :
- une entité de contrôle (30), dite « entité primaire de contrôle », selon l'une des revendications 8 à 10; et
- une entité de contrôle (31), dite « entité secondaire de contrôle », selon l'une des revendications 11 à 13;
ladite entité secondaire de contrôle mettant en œuvre, sur détection d'une inactivité d'au moins un flux associé à ladite session, une politique de contrôle de session reçue de l'entité primaire de contrôle pour ladite session.

## Patentansprüche

1. Verfahren zur Überwachung einer Sitzung zur Bereitstellung eines Dienstes zwischen einer ersten und einer zweiten Einheit, wobei mindestens ein Datenfluss der Sitzung zugeordnet ist, wobei das Verfahren nach Senden einer Sitzungsüberwachungsnachricht durch die erste Einheit an die zweite Einheit umfasst:
- Einfügen (E7, F11) einer Sitzungsüberwachungspolitik in die Sitzungsüberwachungsnachricht, die bei Inaktivität mindestens eines der Sitzung zugeordneten Datenflusses durchzuführen ist, durch eine sogenannte primäre Überwachungseinheit, die sich auf einem Netzpfad zwischen den beiden Einheiten befindet, wobei die Sitzungsüberwachungspolitik (E6, F11), die von der primären Überwachungseinheit auf der Grundlage einer Sitzungsüberwachungspolitik erhalten wurde, die durch die erste Einheit in die Sitzungsüberwachungsnachricht eingefügt wurde oder von der primären Überwachungseinheit abhängig von einer Art des Dienstes erzeugt wurde (E6), wobei die Inaktivität des mindestens einen Datenflusses in einem Nichtaufbau oder einer vorzeitigen Freigabe des mindestens einen Datenflusses besteht;
- Erhalten (E12, F13) der Sitzungsüberwachungspolitik in der Sitzungsüberwachungsnachricht oder in einer Antwort der zweiten Einheit auf die Sitzungsüberwachungsnachricht durch eine sogenannte sekundäre Überwachungseinheit (32), die von der primären Überwachungseinheit verschieden ist, sich auf dem Netzpfad zwischen der ersten und zweiten Einheit befindet und damit beauftragt ist, die Sitzungsüberwachungspolitik durchzuführen; und
- bei Erkennung (E15, F15) einer Inaktivität des Datenflusses Durchführen (E17, F17) der Sitzungsüberwachungspolitik durch die sekundäre Überwachungseinheit.

2. Verfahren nach Anspruch 1, wobei die Sitzungsüberwachungspolitik zu der Gruppe gehört, die eine sofortige Freigabe der Sitzung, eine verzögerte Freigabe der Sitzung, eine Aufrechterhaltung der Sitzung und einen Versuch des Wiederaufbaus eines Flusses der Sitzung umfasst.

3. Verfahren nach Anspruch 1, wobei die Sitzungsüberwachungspolitik durch ein Attribut einer Beschreibung eines Flusses der Sitzung definiert ist, die in einem SDP-Angebot oder einer -Antwort zur Sitzungsüberwachungsnachricht enthalten ist.

4. Verfahren nach Anspruch 1, wobei die Sitzungsüberwachungspolitik in einem Kopffeld der Sitzungsüberwachungspolitik enthalten ist.

5. Verfahren nach Anspruch 1, wobei die Sitzungsüberwachungspolitik bei Erkennung einer Inaktivität eines Datenflusses durchgeführt wird, der zur Gruppe gehört, die einen Multimediafluss und einen Überwachungsfluss umfasst.

6. Verfahren nach Anspruch 1, wobei die Sitzungsüberwachungsnachricht eine SIP-Nachricht ist.

7. Verfahren nach einem der Ansprüche 1 bis 6, wobei die Sitzungsüberwachungspolitik an den Datenfluss angepasst ist.

8. Sogenannte "primäre" Einheit zur Überwachung (30) einer Sitzung zur Bereitstellung eines Dienstes zwischen einer primären und einer sekundären Einheit in einem Kommunikationsnetz, wobei sich die primäre Überwachungseinheit in einem Netzpfad zwischen der primären und der sekundären Einheit befindet und umfasst:
- ein Erhaltensmodul (310) und/oder ein Erzeugungsmodul (320), das dazu eingerichtet ist, auf der Grundlage einer Sitzungsüberwachungspolitik, die in eine Sitzungsüberwachungsnachricht eingefügt wurde, die von der ersten Einheit an die zweite Einheit gesendet wird, eine Sitzungsüberwachungspolitik, die bei Inaktivität mindestens eines der Sitzung zugeordneten Datenflusses durchzuführen ist, zu erhalten oder abhängig von einer Art des Dienstes zu erzeugen, wobei die Inaktivität in einem Nichtaufbau oder einer vorzeitigen Freigabe des Datenflusses besteht;
- ein Sendemodul (330), das dazu eingerichtet ist, die Sitzungsüberwachungspolitik in die Sitzungsüberwachungsnachricht oder in eine Antwort der zweiten Einheit auf die Sitzungsüberwachungsnachricht einzufügen, wobei diese für eine sogenannte "sekundäre" Überwachungseinheit bestimmt ist, die von der primären Überwachungseinheit verschieden ist, sich auf dem Netzpfad zwischen der primären und der sekundären Einheit befindet und dafür zuständig ist, die Sitzungsüberwachungspolitik durchzuführen.

9. Überwachungseinheit (30) nach Anspruch 8, wobei das Erhaltensmodul (310) dazu eingerichtet ist, die Sitzungsüberwachungspolitik auf der Grundlage eines SDP-Angebots oder einer -Antwort zu erhalten, das/die in der Sitzungsüberwachungsnachricht enthalten ist, wobei die Sitzungsüberwachungspolitik ein Attribut einer Beschreibung eines Flusses der Sitzung ist, die im SDP-Angebot oder in der -Antwort enthalten ist.

10. Überwachungseinheit (30) nach Anspruch 8, wobei das Erhaltensmodul (310) dazu eingerichtet ist, die Sitzungsüberwachungspolitik auf der Grundlage eines Kopffelds der Sitzungsüberwachungsnachricht zu erhalten.

11. Sogenannte "sekundäre" Einheit (31) zur Überwachung (31) einer Sitzung zur Bereitstellung eines Dienstes zwischen einer ersten und einer zweiten Einheit in einem Kommunikationsnetz, wobei sich die sekundäre Überwachungseinheit auf einem Netzpfad zwischen der ersten und der zweiten Einheit befindet und umfasst:
- ein Empfangsmodul (410), das dazu eingerichtet ist, in einer Sitzungsüberwachungsnachricht, die von der ersten Einheit an die zweite Einheit gesendet wird, oder in einer Antwort der zweiten Einheit auf die Sitzungsüberwachungsnachricht eine Sitzungsüberwachungspolitik zu empfangen, die bei Inaktivität mindestens eines der Sitzung zugeordneten Datenflusses durchzuführen ist, wobei die Inaktivität in einem Nichtaufbau oder einer vorzeitigen Freigabe des Datenflusses besteht, wobei die Sitzungsüberwachungspolitik durch eine sogenannte primäre Überwachungseinheit, die von der sekundären Überwachungseinheit verschieden ist und sich auf dem Netzpfad zwischen den beiden Einheiten befindet, auf der Grundlage einer Sitzungsüberwachungspolitik, die von der ersten Einheit in die Sitzungsüberwachungsnachricht eingefügt wird, erhalten wird oder von der sogenannten primären Überwachungseinheit abhängig von einer Art des Dienstes erzeugt und von der primären Überwachungseinheit in die Sitzungsüberwachungsnachricht eingefügt wird;
- ein Durchführmodul (420), das dazu eingerichtet ist, die Sitzungsüberwachungspolitik durchzuführen, wenn eine Inaktivität des Datenflusses erkannt wird.

12. Überwachungseinheit (31) nach Anspruch 11, wobei das Durchführmodul (420) dazu eingerichtet ist, eine sofortige Freigabe der Sitzung zur Bereitstellung eines bestimmten Dienstes, eine verzögerte Freigabe der Sitzung zur Bereitstellung eines bestimmten Dienstes, eine Aufrechterhaltung der Sitzung zur Bereitstellung eines bestimmten Dienstes oder einen Versuch zum Wiederaufbau eines Datenflusses der Sitzung zur Bereitstellung eines bestimmten Dienstes auszuführen oder zu befehlen.

13. Überwachungseinheit (31) nach Anspruch 11, außerdem umfassend ein Erkennungsmodul (430), das dazu eingerichtet ist, eine Inaktivität mindestens eines Flusses der Sitzung zur Bereitstellung eines bestimmten Dienstes zu erkennen.

14. System zur Überwachung der Bereitstellung einer Sitzung zwischen zwei Einheiten in einem Kommunikationsnetz, umfassend:
- eine Überwachungseinheit (30), "primäre Überwachungseinheit" genannt, nach einem der Ansprüche 8 bis 10; und
- eine Überwachungseinheit (31), "sekundäre Überwachungseinheit" genannt, nach einem der Ansprüche 11 bis 13;
wobei die sekundäre Überwachungseinheit bei Erkennung einer Inaktivität mindestens eines der Sitzung zugeordneten Datenflusses eine Sitzungsüberwachungspolitik durchführt, die von der primären Überwachungseinheit für die Sitzung erhalten wurde.

## Claims

1. Method for controlling a session for providing a service between a first and a second entity, at least one data stream being associated with said session, said method comprising, following the transmission of a session control message by the first entity to the second entity:
- insertion (E7, F11), into said session control message, by an entity referred to as the primary control entity and located on a network path between the two entities, of a session control policy to be implemented in the event of inactivity of at least one data stream associated with said session, said session control policy having been obtained (E6, F11) by said primary control entity from a session control policy inserted by the first entity into said session control message, or having been generated (E6) by said primary control entity depending on a type of said service, said inactivity of said at least one data stream consisting of non-establishment or of premature release of said at least one data stream;
- obtainment (E12, F13), from said session control message or from a response of the second entity to said session control message, of said session control policy by an entity referred to as the secondary control entity (32), which is distinct from the primary control entity, located on the network path between the first and second entities and responsible for implementing said session control policy; and
- on detection (E15, F15) of inactivity of said data stream, implementation (E17, F17) of said session control policy by the secondary control entity.

2. Method according to Claim 1, wherein said session control policy belongs to the group comprising immediate release of the session, deferred release of the session, maintenance of the session, and an attempt to reestablish a stream of the session.

3. Method according to Claim 1, wherein said session control policy is defined by an attribute of a description of a stream of the session, included in an SDP offer or response associated with the session control message.

4. Method according to Claim 1, wherein said session control policy is included in a header of the session control message.

5. Method according to Claim 1, wherein said session control policy is implemented on detection of inactivity of a data stream belonging to the group comprising a multimedia stream and a control stream.

6. Method according to Claim 1, wherein said session control message is an SIP message.

7. Method according to any one of Claims 1 to 6, wherein said session control policy is adapted to said data stream.

8. Entity referred to as the "primary" control entity (30) for controlling, in a communication network, a session for providing a service between a first and a second entity, said primary control entity being located on a network path between the first and second entities and comprising:
- an obtainment module (310) and/or a generation module (320) arranged to obtain, from a session control policy inserted into a session control message transmitted by the first entity to the second entity, or to generate, depending on a type of said service, a session control policy to be implemented in the event of inactivity of at least one data stream associated with the session, said inactivity consisting of non-establishment or of premature release of said data stream;
- a sending module (330), arranged to insert, into said session control message or into a response of the second entity to said session control message, the session control policy, the latter being intended for an entity referred to as the secondary control entity which is distinct from the primary control entity, located on the network path between the first and second entities and responsible for implementing said session control policy.

9. Control entity (30) according to Claim 8, wherein said obtainment module (310) is arranged to obtain said session control policy from an SDP offer or response included in the session control message, said session control policy being an attribute of a description of a stream of the session contained in said SDP offer or response.

10. Control entity (30) according to Claim 8, wherein said obtainment module (310) is arranged to obtain said session control policy from a header of the session control message.

11. Entity referred to as the "secondary" control entity (31) for controlling, in a communication network, a session for providing a service between a first and a second entity, said secondary control entity being located on a network path between the first and second entities and comprising:
- a reception module (410), arranged to receive, in a session control message transmitted by the first entity to the second entity or in a response of the second entity to said session control message, a session control policy to be implemented in the event of inactivity of at least one data flow associated with the session, said inactivity consisting of non-establishment or premature release of said data stream, the session control policy having been obtained by an entity referred to as the primary control entity, which is distinct from the secondary control entity, located on the network path between the two entities, from a session control policy inserted by the first entity into said session control message, or having been generated by said primary control entity depending on a type of said service and inserted by the primary control entity into said session control message;
- an implementation module (420), arranged to implement said session control policy if inactivity of the data stream is detected.

12. Control entity (31) according to Claim 11, wherein said implementation module (420) is arranged to carry out or order immediate release of said session for providing a certain service, deferred release of said session for providing a certain service, maintenance of said session for providing a certain service, or an attempt to reestablish a stream of said session for providing a certain service.

13. Control entity (31) according to Claim 11, further comprising a detection module (430) arranged to detect inactivity of at least one stream of said session for providing a certain service.

14. System for controlling a session for providing a service between two entities in a communication network, comprising:
- a control entity (30), referred to as the "primary control entity", according to one of Claims 8 to 10; and
- a control entity (31), referred to as the "secondary control entity", according to one of Claims 11 to 13; said secondary control entity implementing, on detection of inactivity of at least one stream associated with said session, a session control policy received from the primary control entity for said session.
